# EUROPEAN PATENT SPECIFICATION

(11) **EP 1 251 693 B1**
(45) Date of publication and mention of the grant of the patent: **16.08.2006**
(21) Application number: 02008057.8
(22) Date of filing: 11.04.2002
(51) Int. Cl.: H04N 5/445, H04N 5/60, H04N 7/088

(54) **Method and apparatus for control of auxiliary video information display**
Verfahren und Gerät zur Kontrolle der Anzeige einer Zusatzvideoinformation
Méthode et appareil de contrôle de l'affichage d'une information vidéo supplémentaire

(30) Priority: 19.04.2001 US 284852 P
(43) Date of publication of application: 23.10.2002
(73) Proprietor: Thomson Licensing, 92100 Boulogne-Billancourt (FR)
(72) Inventor: Hawkins, Bret, David, Indianapolis, IN 46268 (US)
(74) Representative: Rumpler, Wolfgang

(56) References cited:
- EP-A- 0 614 315
- US-A- 5 408 273
- US-A- 5 430 495
- US-A- 5 477 277
- US-A- 5 751 373
- PATENT ABSTRACTS OF JAPAN vol. 1997, no. 08, 29 August 1997 (1997-08-29) & JP 09 107529 A (TOSHIBA CORP), 22 April 1997 (1997-04-22)
- PATENT ABSTRACTS OF JAPAN vol. 014, no. 040 (P-0995), 25 January 1990 (1990-01-25) & JP 01 273271 A (PIONEER ELECTRON CORP;OTHERS: 01), 1 November 1989 (1989-11-01)

## Description

This non-provisional U.S. patent application claims priority to and/or the benefit of provisional U.S. patent application serial number 60/284,852 filed April 19, 2001, entitled Method and Apparatus For Control of Auxiliary Video Information Display.

### Field of the Invention

The present invention relates to television signal processing and, more particularly, to television signal processing systems that include provisions for processing auxiliary video information such as closed caption data.

### Background of the Invention

A video signal processing section of a television system includes provisions for decoding and displaying auxiliary video information such as closed captioned data. Closed captioned data includes ASCII digital data representing text corresponding to audio information, such as speech, that may be included in a television signal. The closed captioned data is displayed on the screen of the television system when the closed caption feature is enabled and is intended to provide a visual representation of the spoken portion of a television program as an aid, for example, to hearing impaired television viewers. In the United States for example, a closed captioning standard is set forth by the Federal Communication Commission "FCC" Regulations (see e.g. 47 CFR §§ 15.119 and 73.682). FCC regulations specify that digital closed caption data is to be transmitted in line 21 of field 1 in the video signal. Data representative of two ASCII characters is transmitted in each occurrence of line 21 of field 1.

Closed captioning data is extracted from the video signal by a decoder. The decoder signal is coupled to the video display when the closed captioning function/feature is enabled by a viewer. Closed captioning is usually enabled by selecting the closed captioning function from a menu displayed on the video screen during a control mode of operation such as a set-up mode of operation. Once activated, closed captioning typically remains enabled until a viewer activates the appropriate menu and de-selects (disables) the closed captioning function/feature.

One drawback to the current implementation of closed captioning is that a viewer may hesitate to use closed captioning because enabling and disabling closed captioning can require time consuming navigation of set-up menus. Additionally, viewers who are not hearing impaired may never bother to enable closed captioning because the closed captioning display may interfere with the display of the video program. Thus, closed captioning is a feature included in most televisions but seldom used by most television viewers.

US Patent 5,430,495 describes a caption system which provides a video playback apparatus which functions to vary the brightness of caption colors so as to display a more vivid caption according to audio levels. The caption system is directed particularly to an auditoraly handicapped person and is intended to help that person to discern the strength and weakness of the audio portion of the playback.

Japanese Patent Application No. 09-107529 describes a system for changing the flashing period of closed caption information. A control means which controls the closed caption decoder changes the flashing period of closed caption information according to the magnitude of the difference of the average level of sound and the pre-determined reference volume level.

Japanese Patent Application No. 01-273271 describes a system for inserting a caption, musical score, scene explaining sentence, etc., into an animation obtained from a video format signal recorded in a video area or a still picture obtained from a video memory by using sub-codes. The color of a picture changes in accordance with the level of audio signals by means of video format signals outputted from an analog video conversion circuit. The color of the picture inserted by using the sub-codes is changed in correspondence to the level of the audio signal.

U.S. Patent No. 5,751,373 describes a system for selecting television functions. A main menu displaying the highest level of a hierarchical menu including items corresponding to functions of a television receiver is displayed on a left side portion of a screen of the television receiver. When a cursor is moved to the first item of the main menu while the main menu remains displaced on the screen, a sub menu corresponding to the first item is displayed on a right side portion of the screen; and when the cursor is subsequently moved to one of the items forming the sub menu, a predetermined operation is performed.

It is well known that when viewing a television program, a significant variation in audio signal levels may occur. For example, a character in a television program may be shouting in one instance and whispering in another. As well, one character may speak more loudly than another character. If a viewer adjusts the audio level to a setting appropriate for the loud audio portions of the television program, softly spoken speech may be inaudible unless the audio level is adjusted by the viewer. Frequent variations in audio level may necessitate corresponding frequent adjustment of the audio level that can quickly become annoying to a viewer.

### Summary of the Invention

In accordance with one form of the subject invention, a signal processing system is operative to control display of video information. Particularly, a system for processing video and audio signals is operative to provide controlled display of video information pertaining to a television program signal in response to a parameter of the television program signal. More particularly, a television signal processing system is operative to provide controlled display of auxiliary video information of a television program signal in response to a parameter of an audio signal portion of the television program signal.

In accordance with one aspect of the invention, a method for controlling display of video information according to claim 1 is provided.

In accordance with another aspect of the invention, a television signal processing apparatus according to claim 6 is provided.

### Brief Description of the Drawings

The above-mentioned and other features and advantages of this invention, and the manner of attaining them, will become more apparent and the invention will be better understood by reference to the following description of an exemplary embodiment of the invention taken in conjunction with the accompanying drawings, wherein:
Fig. 1 depicts, in block diagram form, an exemplary basic apparatus constructed in accordance with the principles of the subject invention;
Fig. 2 depicts, in block diagram form, an exemplary apparatus constructed in accordance with the principles of the subject invention;
Fig. 3 depicts, in flow chart form, an exemplary manner of operation in accordance with the principles of the subject invention; and
Fig. 4 depicts, in flow chart form, a second exemplary manner of operation in accordance with the principles of the subject invention.

Corresponding reference characters indicate corresponding parts throughout the several views.

### Detailed Description

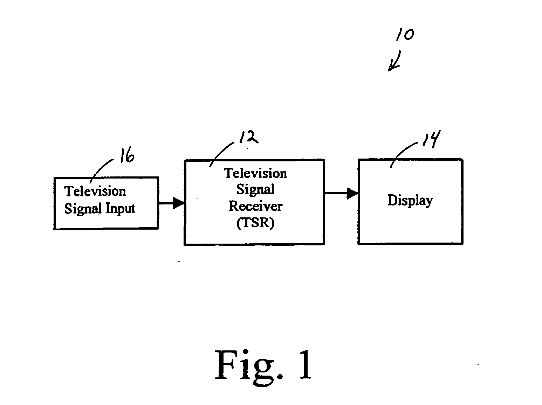

Referring now to Fig. 1, there is shown a system, generally designated 10, that is configured, operative, and/or adapted to process video and audio signals. Exemplary embodiments are described herein in the context of receiving and processing a television program signal that includes an auxiliary information signal portion or component, a video program signal portion or component, and an audio program signal portion or component. However, the invention is also applicable to systems involving apparatus and/or a method for receiving and processing separate signals associated with audio, video, and auxiliary information signal components. In addition, the television signal and/or the program signal components may be either analog or digital. The signal or signals, e.g., a television signal, may come from any source, as represented by the signal input 16 in Fig. 1. The video program portion typically includes auxiliary information or data that may or may not pertain to the program carried by the television program signal. However, a system constructed or operating in accordance with the invention may receive auxiliary information as a separate signal. In addition, the auxiliary information may include, but is not limited to, data pertaining to closed caption/captioning, teletext, program guide, and/or the like.

System 10 shown in Fig. 1 includes apparatus for processing a television signal, e.g., television signal receiver (TSR) 12, that is coupled to a display 14. The display 14 may or may not be integral with the TSR 12. As such, the television signal receiver 12, and television signal processing apparatus or system as used herein, may be any type of device that is operative to receive and process a television signal or television signals, either with or without a display device, such as, without being limiting, a television, a cable box, a satellite receiver, a general set-top box, a digital video interface, and/or the like. The display 14 may be any type of video display such as a cathode ray tube, LCD screen, plasma screen, and/or the like.

The television signal receiver 12 receives a television signal via a television signal input 16. The television signal input 16 is representative of a television signal and/or the input thereof. In accordance with an aspect of the subject invention, the television signal receiver 12 is operative to receive and process the television signal representing a television program (a television program signal) as well as monitor a parameter associated with the television program and set a level of a parameter of the television program signal for use in the monitoring operation. Particularly, the television signal receiver 12 is operative to allow the setting of a parameter level or value, the parameter level pertaining to an aspect or parameter of the audio program portion and/or video program portion of the television program signal. The television signal receiver 12 is further operative to process or monitor the television program signal and control the display of video program information from or with respect to the television program signal on the display 14 based on, or in response to, the monitoring operation involving, for example, comparing a selected parameter level and a parameter value of the audio program portion and/or the video program portion of the television program signal. Particularly, the television signal receiver 12 is operative to process the television program signal and control the display of auxiliary video program information pertaining to (and typically contained within) the television program signal according to a comparison of the selected parameter level of the audio program portion and a parameter value of the audio program portion of the television program signal. In the context of the exemplary embodiments described herein, the auxiliary video program signal, auxiliary program signal, or simply auxiliary information comprises closed caption/closed captioning information/data, the parameter value is audio level of the audio program portion of the television program signal, and the parameter level is an audio level.

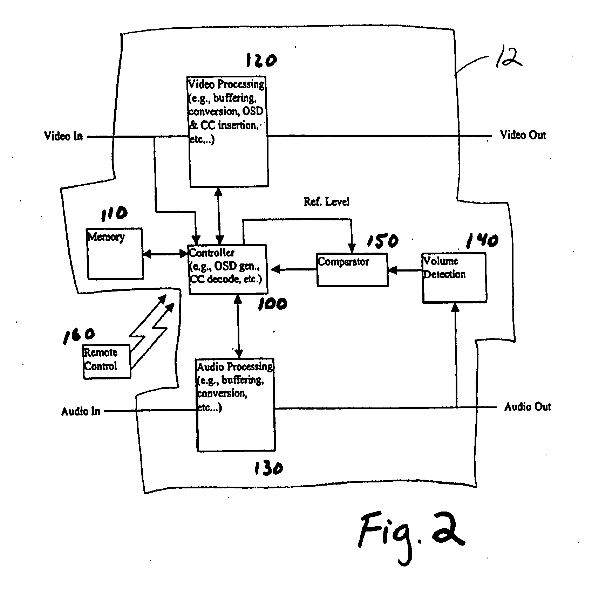

Referring now to Fig. 2 there is shown an embodiment of the television signal receiver 12. Particularly, the television signal receiver 12 is operated to process a television signal in accordance with the principles of the subject invention as described herein. The television signal receiver 12 includes a controller, control circuitry/logic, and/or the like 100, a memory, memory circuitry/logic, and/or the like 110, a video processor, processor/processing circuitry/logic, processing unit and/or the like 120, an audio processor, processor/processing circuitry/logic, processing unit, and/or the like 130, a volume detector, detector circuitry/logic, and/or the like 140, and a comparator, comparator circuitry/logic, and/or the like 150. A remote control, control unit, and/or the like 160 is shown that is operative to accept user input and transmit the user input to the television signal receiver 12. As such, the television signal receiver 12 is operative to receive, decode, and process the transmitted user input. User input via the remote control 160 is typically in response to a set-up menu or set-up menus or the like generated by the television signal receiver 12 and shown on the display 14. User input, however, may be accomplished by other means (e.g., via switches such as front-panel controls of the television receiver and/or via a remote device such as a PC or other control device connected to the television receiver via a home network).

The controller 100 controls the operation of the television signal receiver 12 and is coupled to the other components and or functions as shown in Fig. 1 as well as functions not shown in Fig. 1 that are part of a television signal receiver such as input signal sources including but not limited to a tuner and signal selection switches for selecting a source of input signals.

The input signals to the television signal receiver 12 comprise video input signals coupled to an input (Video In) of the video processing unit 120 and an audio input signal coupled to an input (Audio In) of the audio processing unit 130. User control of the television signal receiver 12 occurs by operating the remote control 160 for example to select signal sources (such as devices in our channels) and establish set up parameters of the television receiver 12. One such parameter in accordance with the subject invention is enabling and/or disabling of display of video program information comprising auxiliary information such as closed captioning and enabling or disabling of an auxiliary information control feature. Set up parameters may be established by user selection of parameters from on screen display "OSD" menus as well. A video signal representing the OSD menus is generated by the controller 100 and the video processing unit 120 in response to remote control signals from the remote control 160, output from the video processing unit 120 as part of the signal VIDEO OUT, and displayed on the display device 14 such as a kinescope or flat panel display.

The video input and audio input signals represent video and audio program portions or signal components, of a television signal or television program signal. As is well known, the video and audio input signals shown in Fig. 2 may represent signal components received directly as separate signal components from devices such as a VCR or may represent signal components that have decoded from a television signal such as an NTSC television signal. If the NTSC signal was received modulated at RF frequencies, e.g., broadcast or cable TV signals, the video and audio input signals are produced by video and audio IF units not shown in Fig. 2.

In addition to control the operation of the television signal receiver 12 in generating OSD information, the controller 100 receives the video input signal and when closed captioning is enabled, decodes closed captioned information included in the video signal. The decoded closed captioned information is formatted into a form suitable for display, e.g., using the OSD processor portion of the controller 100 and coupled to the video processor 120 for insertion into the video out signal when appropriate to produce the desired closed captioned display.

A volume detector 140 is coupled to receive the audio out signal for determining a signal level of the audio signal, and a comparator 150 coupled to receive both a reference level from the control 100 and a signal representing the audio signal level determined by the volume detector 140. The comparator 150 produces an output signal indicating the relationship between the audio signal level and the reference level, e.g., the audio signal level exceeds or is less than the reference level. The controller 100 responds to the relationship-indicating signal produced by the comparator 100 for modifying the video out signal produced by the video processor 120. An example of the operation of the television receiver 12 in accordance with the principles of the subject invention will now be described.

First, a user activates a set-up menu preferably using the remote control 160 and enables a feature that will be referred to herein as an "active closed captioning" feature that involves enabling decoding and display of auxiliary information such as closed captioning when the level of the audio out signal drops below a reference (or parameter or threshold) level or value. The reference level could be a set level, e.g. 5 dB, or as part of enabling the active closed captioning feature, a user could establish the reference level by, for example, using the remote control to set the volume to a level that produces the desired volume while in the set-up mode of operation. When the set-up mode is exited, the reference or parameter level (volume level) will be stored by the controller 100, e.g., in the memory 110 as the audio signal reference level.

After exiting the set-up mode with active closed captioning mode enabled and the reference level established, the volume detector 140 determines the signal level of the audio out signal of a television program signal. The audio out signal is compared to the reference level by the comparator 150. The resulting comparison produces a signal indicating the relationship of the audio signal level to the reference level and/or indicating whether the reference level is exceeded or not. The controller 100 monitors the relationship-indicating signal and enables and disables the display of closed captioning in response to the audio out signal level exhibiting a particular relationship to the reference level. For example, closed captioning is enabled in response to the audio out signal level being less than the reference level, and disabled in response to the audio out signal level rising above the reference level.

One approach to determining the audio out signal level in the volume detector 140 is to maintain a running average of the audio out signal level over a period of, for example, the previous few seconds. Alternatively, while the volume detector 140 and the comparator 150 are indicated as being separate devices, these functions may be implemented in software by the controller 100. Such a software implementation may be particularly advantageous if the audio processor 130 includes digital signal processing of the audio signal that can provide a digital representation of the audio out level, e.g., in decibels, that can be monitored by the controller 100 and compared to the reference level stored in the memory 110.

Processing of the comparison result to determine whether the audio out signal level exhibits a particular relationship to the reference level could also involve considering time periods. For example, closed captioning could be enabled in response to the audio out signal level being less than the reference level for a first period of time and then closed captioning could be disabled in response to the audio out signal exceeding the reference level for a second period of time. The first and second periods of time could be equal or unequal and could be set by a user using a set up menu feature as described above.

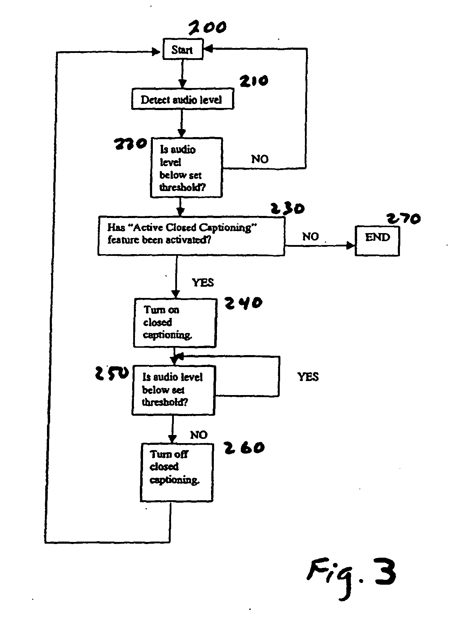

Referring now to Fig. 3, there is illustrated an exemplary method of operation for the system 10, particularly the television signal receiver 12, shown in Figs. 1 and 2. In Fig. 3, execution of the routine e.g., by the controller 100, begins at step 200 and is followed by monitoring of the audio level of a television program signal at steps 210 and 220. Particularly, in step 210 the audio level is detected. In step, 220 it is determined whether the audio level (or value) of the audio program portion of the television program signal is below the set threshold (or audio or parameter level) or the exact relationship of the audio level (or value) of the audio program portion of the television program signal and the set or predetermined threshold audio level. If the audio value (or level) is not below a set threshold reference level, steps 210 and 220 are repeated to provide continuous monitoring of the audio level of the audio program portion of the television program signal. If the audio signal level is less then the reference level or threshold, the routine checks at step 230 to see if the active closed caption feature is enabled. If so, closed captioning is turned on at step 240 followed by the audio level being checked again in step 250. As long at the audio level remains below the reference level, step 250 is repeated and closed captioning remains enabled. When step 250 is executed and the audio signal level is above a reference level, closed captioning is turned off at step 260 followed by the routine staring again at step 200. When the active closed captioning feature is disabled, execution of step 230 will end the routine at step 270.

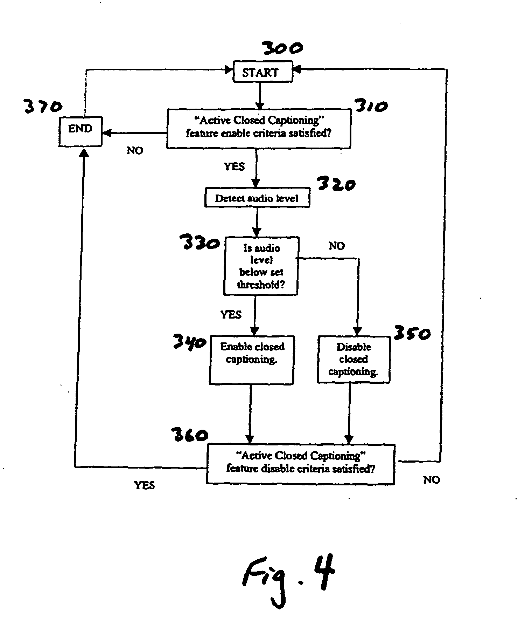

Another aspect of the subject invention is shown in the flow chart of Fig. 4. In addition to depicting a different arrangement of a closed captioning enabling and disabling flow in comparison to that as shown in Fig. 3, the exemplary method shown in Fig. 4 also includes steps in which enable criteria and disable criteria are tested to see if such criteria are satisfied. For example, these criteria can determine when and for how long the active closed captioning feature is or has been enabled. As a specific example, a disable criteria might be a particular time period such as thirty minutes or the length of the current program, i.e., the active closed captioning feature is enabled for a particular time period and/or program and is disabled when the program and/or time period ends.

In Fig. 4, after the routine is entered at 300, a test occurs at step 310 to determine whether the active closed captioning enable criteria are satisfied to determine whether the feature is enabled, e.g., has the enable date and time occurred? If so, the audio level is tested at step 320. If the audio level or value is less than the reference level, closed captioning is enabled at step 340. If the audio level is greater than the set threshold level, closed captioning is disabled at step 350. Following step 340 or step 350, the active closed captioning disable criteria are tested to determine whether to disable the feature. If the criteria are not satisfied, the feature remains enabled and the routine is repeated at step 300. If the disable criteria are satisfied, step 360 is followed by the end of the routine at step 370. The routine also ends at step 370 after step 310 if the enable criteria are not satisfied.

As other examples of enable and disable criteria for controlling and enabling the disabling of the active closed captioning with regard to Fig. 4, the enable/disable criteria could define a particular date and/or time period (e.g. enable the feature tonight at 6:00 pm and disable at 9:00 pm). Also, the criteria could be a particular program. That is, the user could enter the name of a particular program and the controller 100 could compare the program name to program guide information stored, for example, in an electric program guide "EPG" database to determine when the particular program is televised. The active closed captioning feature can then be enabled or disabled during a particular program. The active closed captioning feature could also be enabled for certain channels and disabled for certain channels. Enabling and disabling of the feature could be included as a parameter specifying a user profile such as that included in systems such as DirecTV direct broadcast satellite signal receivers manufactured by Thomson Consumer Electronics, Inc. of Indianapolis, Indiana. Including the active closed captioning feature as an option in the user profile parameters would permit enabling the feature for certain users and disabling it for others.

While this invention has been described as having a preferred design, the present invention can be further modified within the spirit and scope of this disclosure. This application is therefore intended to cover any variations, uses, of adaptations of the invention using its general principles. Further, this application is intended to cover such departures from the present disclosure as come within known or customary practice in the art to which this invention pertains and which fall within the limits of the appended claims.

## Claims

1. A method for controlling the display of video information in a television signal processing apparatus (12) comprising the steps of:
setting a reference level for a parameter of the audio portion of a television program
monitoring the audio portion of said television program;
enabling the display of auxiliary information pertaining to said television program in response to the monitoring of said audio portion
modifying a video signal representing the video portion of said television program by displaying said auxiliary information in response to the monitoring of said audio program portion;
and wherein
the step of monitoring said audio program portion comprises the step of comparing said parameter of the audio program portion to said reference level.

2. The method of claim 1, wherein the step of setting the reference level comprises the step of setting the reference level via a set-up menu; and wherein the step of setting the reference level via a set-up menu includes the step of allowing user input via the set-up menu for setting the reference level.

3. The method of claim 1, wherein the step of comparing a parameter of an audio program portion of a television signal to the reference level includes the step of detecting a parameter of an audio program portion of a television signal.

4. The method of claim 1, wherein the step of modifying a video signal representing a video program portion of the television signal in response to the audio signal comparison includes the step of enabling display of auxiliary information pertaining to the television signal in response to the audio signal comparison indicating that the parameter of the audio portion of the television signal is less than the reference level.

5. The method of claim 4, wherein the step of enabling display of auxiliary information pertaining to the television signal in response to the audio signal comparison indicating that the parameter of the audio portion of the television signal is less than the reference level includes the step of enabling closed captioning of the auxiliary information.

6. Apparatus (12) for processing a television signal comprising:
means (100) for setting a reference level for a parameter of the audio portion of a television program
means for monitoring the audio portion of said television program;
means for enabling the display of auxiliary information pertaining to said television program in response to the monitoring of said audio program
means (100) for modifying a video signal representing the video portion of said television program by displaying said auxiliary information in response to the monitoring of said audio program portion;
and
means (150) for comparing said parameter of said audio program portion of television signal to said reference level.

7. The apparatus (12) of claim 8, wherein the means for setting the reference level comprises means for setting the reference level via a set-up menu (100), and includes means for allowing user input (160) via the set-up menu for setting the reference level.

8. The apparatus (12) of claim 6, wherein the means for comparing a parameter of an audio program portion of a television signal to the reference level (150) includes means for detecting a parameter of an audio program portion of a television signal (140).

9. The apparatus (12) of claim 6, wherein the means for modifying a video signal representing a video program portion of the television signal in response to the audio signal comparison (120) includes means for enabling display of auxiliary information pertaining to the television signal in response to the audio signal comparison indicating that the parameter of the audio portion of the television signal is less than the reference level (120).

10. The television signal receiver (12) of claim 9, wherein the means for enabling display of auxiliary information pertaining to the television signal in response to the audio signal comparison indicating that the parameter of the audio portion of the television signal is less than the reference level (120) includes means for enabling closed captioning (100, 120) of the auxiliary information.

11. The apparatus (12) of claim 6 wherein:
the means (100) for setting a reference level includes a reference level adjuster (100) operative to set a reference level;
the means (150) for comparing a parameter of an audio program portion of a television signal to the reference level includes a signal comparator (150) operative to compare a parameter of an audio program portion of a television signal to the reference level; and
means (100) for modifying a video signal representing a video program portion of the television signal by enabling display of auxiliary information pertaining to the television signal in response to the monitoring of the audio program portion includes a video signal modifier (120) operative to modify a video signal representing a video program portion of the television signal in response to the audio program portion comparison.

12. The apparatus of claim 6, wherein the means (100) for setting a reference level includes an OSD generator (100) operative to set the reference level via a set-up menu.

13. The apparatus of claim 12, wherein the OSD generator (100) allows user input (160) via the set-up menu for setting the reference level.

14. The apparatus of claim 13, wherein the means (150) for comparing a parameter of an audio program portion of a television signal to the reference level includes a detector operative to detect a parameter of an audio program portion of a television signal (140).

15. The apparatus of claim 11, wherein the video signal modifier (120) includes an auxiliary information processor operative to enable display of auxiliary information pertaining to the television signal in response to the audio signal comparison indicating that the parameter of the audio portion of the television signal is less than the reference level (120).

16. The apparatus of claim 15, wherein the auxiliary information processor (100) includes a closed captioned processor (100, 120).

## Patentansprüche

1. Verfahren zum Steuern der Anzeige von Videoinformationen in einem Fernsehsignal-Verarbeitungsgerät (12), umfassend die Schritte:
Einstellen eines Bezugspegels für einen Parameter des Autioteils eines Fernsehprogramms;
Überwachen des Audioteils des Fernsehprogramms;
Wirksammachen der Anzeige von zu dem Fernsehprogramm gehörenden Zusatz-Informationen als Reaktion auf die Überwachung des Audioteils;
Modifizieren eines Videosignals, das den Videoteil des Fernsehprogramms darstellt, durch Anzeigen der Zusatz-Informationen als Reaktion auf die Überwachung des Audio-Programmteils;
wobei der Schritt der Überwachung des Audio-Programmteils den Schritt des Vergleichs des Parameters des Audio-Programmteils mit dem Bezugspegel umfasst.

2. Verfahren nach Anspruch 1, bei dem der Schritt des Einstellens des Bezugspegels den Schritt des Einstellens des Bezugspegels über ein Set-up-Menü umfasst; und wobei der Schritt des Einstellens des Bezugspegels über ein Set-up-Menü den Schritt der Zulassung einer Benutzereingabe über das Set-up-Menü zur Einstellung des Bezugspegels umfasst.

3. Verfahren nach Anspruch 1, bei dem der Schritt des Vergleichs eines Parameters eines Audio-Programmteils eines Fernsehsignals mit dem Bezugspegel den Schritt des Feststellens eines Parameters eines Audio-Programmteils eines Fernsehsignals einschließt.

4. Verfahren nach Anspruch 1, bei dem der Schritt des Modifizierens eines Videosignals, das einen Video-Programmteil des Fernsehsignals darstellt, als Reaktion auf den Audiosignalvergleich den Schritt einschließt, die Anzeige von Zusatz-Informationen, die zu dem Fernsehsignal gehören, als Reaktion auf den Audiosignalvergleich wirksam zu machen, um anzuzeigen, dass der Parameter des Autioteils des Fernsehsignals kleiner als der Bezugspegel ist.

5. Verfahren nach Anspruch 4, bei dem der Schritt des Wirksammachens der Anzeige von zu dem Fernsehsignal gehörenden Zusatz-Informationen als Reaktion auf den Audiosignalvergleich zur Anzeige, dass der Audioteil des Fernsehsignals kleiner als der Bezugspegel ist, den Schritt des Wirksammachens von Untertiteln der Zusatz-Informationen einschließt.

6. Gerät (12) zur Verarbeitung eines Fernsehsignals, umfassend:
Mittel (100) zum Einstellen eines Bezugspegels für einen Parameter des Audioteils eines Fernsehprogramms;
Mittel zum Überwachen des Audioteils des Fernsehprogramms ;
Mittel zum Wirksammachen der Anzeige von zu dem Fernsehprogramm gehörenden Zusatz-Informationen als Reaktion auf die Überwachung des Audioprogramms;
Mittel (100) zum Modifizieren eines Videosignals, das den Videoteil des Fernsehprogramms darstellt, durch Anzeigen der Zusatz-Informationen als Reaktion auf die Überwachung des Audio-Programmteils;
Mittel (150) zum Vergleich des Parameters des Audio-Programmteils des Fernsehsignals mit dem Bezugspegel.

7. Gerät (12) nach Anspruch 8, bei dem die Mittel zum Einstellen des Bezugspegels Mittel zum Einstellen des Bezugspegels über ein Set-up-Menü (100) umfassen, und Mittel für die Zulassung einer Benutzereingabe (160) über das Set-up-Menü zum Einstellen des Bezugspegels einschließen.

8. Gerät (12) nach Anspruch 6, bei dem die Mittel zum Vergleich eines Parameters eines Audio-Programmteils eines Fernsehsignals mit dem Bezugspegel (150) Mittel zur Feststellung eines Audio-Programmteils eines Fernsehsignals (140) einschließen.

9. Gerät (12) nach Anspruch 6, bei dem die Mittel zum Modifizieren eines Videosignals, das einen Video-Programmteil des Fernsehsignals darstellt, als Reaktion auf den Audiosignalvergleich (120), Mittel enthalten, um die Anzeige von Zusatz-Informationen, die zu dem Fernsehsignal gehören, als Reaktion auf den Audiosignalvergleich wirksam zu machen, um anzuzeigen, dass der Audioteil des Fernsehsignals kleiner als der Bezugspegel (120) ist.

10. Fernsehsignalempfänger (12) nach Anspruch 9, bei dem die Mittel zum Wirksammachen der Anzeige von zu dem Fernsehsignal gehörenden Zusatz-Informationen zur Anzeige, dass der Audioteil des Fernsehsignals kleiner als der Bezugspegel (120) ist, Mittel einschließen, um Untertitel (100, 120) der Zusatz-Informationen wirksam zu machen.

11. Gerät (12) nach Anspruch 6, bei dem:
die Mittel (100) zum Einstellen eines Bezugspegels eine Bezugspegel-Einstellvorrichtung (100) enthalten, um einen Bezugspegel einzustellen;
die Mittel (150) zum Vergleich eines Parameters eines Audio-Programmteils eines Fernsehsignals mit dem Bezugspegel einen Signalkomparator (150) enthalten, der einen Parameter eines Audio-Programmteils eines Fernsehsignals mit dem Bezugspegel vergleicht; und
die Mittel (100) zum Modifizieren eines Videosignals, das einen Video-Programmteil des Fernsehsignals darstellt, durch Wirksammachen der Anzeige von zu dem Fernsehsignal gehörenden Zusatz-Informationen als Reaktion auf die Überwachung des Audio-Programmteils einen Videosignal-Modifizierer (120) enthalten, der ein Videosignal, das einen Video-Programmteil des Fernsehsignals darstellt, als Reaktion auf den Vergleich des Audio-Programmteils modifiziert.

12. Gerät nach Anspruch 6, bei dem die Mittel (100) zum Einstellen eines Bezugspegels einen OSD-Generator (100) enthalten, der einen Bezugspegel über ein Set-up-Menü einstellt.

13. Gerät nach Anspruch 12, bei dem der OSD-Generator (100) eine Benutzereingabe (160) über das Set-up-Menü erlaubt, um den Bezugspegel einzustellen.

14. Gerät nach Anspruch 13, bei dem die Mittel (150) zum Vergleich eines Parameters eines Audio-Programmteils eines Fernsehsignals mit dem Bezugspegel einen Detektor enthalten, der einen Parameter eines Audio-Programmteils eines Fernsehsignals (140) feststellt.

15. Gerät nach Anspruch 11, bei dem der Videosignal-Modifizierer (120) einen Zusatz-Informationsprozessor enthält, der die Anzeige von zu dem Fernsehsignal gehörenden Zusatz-Informationen als Reaktion auf den Audiosignalvergleich wirksam macht, um anzuzeigen, dass der Parameter des Audioteils des Fernsehsignals kleiner ist als der Bezugspegel (120).

16. Gerät nach Anspruch 15, bei dem der Zusatz-Informationsprozessor ein Untertitelprozessor (100, 120) ist.

## Revendications

1. Une méthode de contrôle de l'affichage d'une information vidéo dans un appareil de traitement des signaux de télévision (12) comprenant les étapes consistant à:
définir un niveau de référence pour un paramètre de la partie audio d'un programme télévisé ;
surveiller la partie audio dudit programme télévisé ;
permettre l'affichage d'une information supplémentaire se rapportant au dit programme télévisé en réponse à la surveillance de ladite partie audio ;
modifier un signal vidéo représentant la partie vidéo dudit programme télévisé en affichant ladite information supplémentaire en réponse à la surveillance de ladite partie de programme audio ;
et où
l'étape de surveillance de ladite partie de programme audio comprend l'étape consistant à comparer ledit paramètre de la partie de programme audio audit niveau de référence.

2. La méthode de la revendication 1, où l'étape de définition du niveau de référence comprend l'étape consistant à définir le niveau de référence à l'aide d'un menu réglage ; et où l'étape de définition du niveau de référence à l'aide d'un menu réglage comprend l'étape consistant à autoriser une entrée utilisateur via le menu réglage pour définir le niveau de référence.

3. La méthode de la revendication 1, où l'étape consistant à comparer un paramètre d'une partie de programme audio d'un signal de télévision au niveau de référence comprend l'étape de détection d'un paramètre d'une partie de programme audio d'un signal de télévision.

4. La méthode de la revendication 1, où l'étape consistant à modifier un signal vidéo représentant une partie de programme vidéo du signal de télévision en réponse à la comparaison du signal audio comprend l'étape qui permet d'afficher une information supplémentaire se rapportant au signal de télévision en réponse à la comparaison des signaux audio indiquant que le paramètre de la partie audio du signal de télévision est inférieur au niveau de référence.

5. La méthode de la revendication 4, où l'étape qui permet d'afficher une information supplémentaire se rapportant au signal de télévision en réponse à la comparaison des signaux audio indiquant que le paramètre de la partie audio du signal de télévision est inférieur au niveau de référence comprend l'étape qui permet le sous-titrage codé de l'information supplémentaire.

6. Appareil (12) permettant de traiter un signal de télévision comprenant :
un dispositif (100) servant à définir un niveau de référence pour un paramètre de la partie audio d'un programme télévisé ;
un dispositif servant à surveiller la partie audio dudit programme télévisé;
dispositif permettant l'affichage d'une information supplémentaire se rapportant au dit programme télévisé en réponse à la surveillance dudit programme audio ;
dispositif (100) servant à modifier un signal vidéo représentant la partie vidéo dudit programme télévisé en affichant ladite information supplémentaire en réponse à la surveillance de ladite partie de programme audio ;
et
dispositif (150) servant à comparer ledit paramètre de ladite partie de programme d'un signal de télévision au dit niveau de référence.

7. L'appareil (12) de la revendication 8, où le dispositif servant à définir le niveau de référence comprend le dispositif permettant de définir le niveau de référence à l'aide d'un menu réglage (100), et inclut également un dispositif autorisant une entrée utilisateur (160) via le menu réglage pour définir le niveau de référence.

8. L'appareil (12) de la revendication 6, où le dispositif servant à comparer un paramètre d'une partie de programme audio d'un signal de télévision au niveau de référence (150) comprend l'étape de détection d'un paramètre d'une partie de programme audio d'un signal de télévision (140).

9. L'appareil (12) de la revendication 6, où le dispositif servant à modifier un signal vidéo représentant une partie de programme vidéo du signal de télévision en réponse à la comparaison des signaux audio (120) comprend un dispositif qui permet d'afficher une information supplémentaire se rapportant au signal de télévision en réponse à la comparaison des signaux audio indiquant que le paramètre de la partie audio du signal de télévision est inférieur au niveau de référence (120).

10. Le récepteur de signaux de télévision (12) de la revendication 9, où le dispositif permettant d'afficher une information supplémentaire se rapportant au signal de télévision en réponse à la comparaison des signaux audio indiquant que le paramètre de la partie audio du signal de télévision est inférieur au niveau de référence (120) comprend un dispositif permettant le sous-titrage codé (100, 120) de l'information supplémentaire.

11. L'appareil (12) de la revendication 6, où :
le dispositif (100) servant à définir un niveau de référence comprend un dispositif de réglage de niveau de référence (100) utilisé pour définir un niveau de référence ;
le dispositif (150) servant à comparer un paramètre d'une partie de programme audio d'un signal de télévision au niveau de référence comprend un comparateur de signaux (150) utilisé pour comparer un paramètre d'une partie de programme audio d'un signal de télévision au niveau de référence ; et
un dispositif (100) qui sert à modifier un signal vidéo représentant une partie de programme vidéo du signal de télévision en permettant l'affichage d'une information supplémentaire se rapportant au signal de télévision en réponse à la surveillance de la partie de programme audio comprend un modificateur de signal (120) utilisé pour modifier un signal vidéo représentant une partie de programme vidéo du signal de télévision en réponse à la comparaison de la partie de programme audio.

12. L'appareil de la revendication 6, où le dispositif (100) servant à définir un niveau de référence comprend un générateur OSD (100) utilisé pour définir le niveau de référence à l'aide d'un menu réglage.

13. L'appareil de la revendication 12, où le générateur OSD (100) autorise une entrée utilisateur (160) via le menu réglage pour définir le niveau de référence.

14. L'appareil de la revendication 13, où le dispositif (150) servant à comparer un paramètre d'une partie de programme audio d'un signal de télévision au niveau de référence comprend un détecteur utilisé pour détecter un paramètre d'une partie de programme audio d'un signal de télévision (140).

15. L'appareil de la revendication 11, où le modificateur de signal vidéo (120) comprend un processeur d'informations supplémentaires permettant l'affichage d'une information supplémentaire se rapportant au signal de télévision en réponse à la comparaison des signaux audio indiquant que le paramètre de la partie audio des signaux de télévision est inférieur au niveau de référence (120).

16. L'appareil de la revendication 15, où le processeur d'informations supplémentaires (100) comprend un processeur de sous-titrage codé (100, 120).
